# EUROPEAN PATENT APPLICATION

(11) **EP 4 651 458 A1**
(43) Date of publication of application: **19.11.2025**
(21) Application number: 24305733.8
(22) Date of filing: 13.05.2024
(51) Int. Cl.: H04L 41/16, H04W 24/02

(54) **METHODS, APPARATUSES AND SYSTEMS RELATED TO TRANSPORT PARTIAL RESULTS DATA WITH INTERMEDIATE DATA**

(71) Applicant: InterDigital CE Patent Holdings, SAS, 75017 Paris (FR)
(72) Inventor: ONNO, Stephane, 35760 SAINT GREGOIRE (FR); FILOCHE, Thierry, 35410 CHATEAUGIRON (FR); QUINQUIS, Cyril, 35520 MELESSE (FR)
(74) Representative: Interdigital

(57) **Abstract**

In an embodiment, a method, implemented in a wireless transmit/receive unit, WTRU, comprises receiving a first message comprising first information indicating a configuration of splitting an AI model between the WTRU and a network; determining, based on the first message, an AI sub model configuration comprising a first sub model configuration for the WTRU and a second sub model configuration for the network; determining, from one or more nodes of the first sub model, one or more partial results data of inferenced input data; determining transmission of the one or more partial results data to the network, based on the sub AI model configuration; combining the one or more partial results data with intermediate data in a single data packet to be transmitted, based on the sub AI model configuration; and transmitting, to the network, a second message comprising the single data packet.

## Description

### FIELD OF THE INVENTION

The present disclosure is generally directed to methods and procedures related to transport partial results data with intermediate data. More particularly, the present disclosure relates to a method to transport inference results, partial or aggregated, with intermediate data from one endpoint to another depending on the selection of the model to be split between two endpoints.

### BACKGROUND

A basic architectures for splitting inferences of an artificial intelligence (AI) model composed of n layers or nodes (1..n) between a network and a user equipment, where a first inference may process first part of the AI model, i.e. layers 1..k, and a second inference may process a second part of the AI model, i.e. layers k+1..n is known. The architecture may allow delivery and access functions of intermediate data between the user equipment and the network for two different scenarios: (i) when a media data source originates from the user equipment, the first part of the inference may be performed in the user equipment, the second part of the inference may be performed in the network. The resulting output data may be finally sent back to the user equipment; (ii) when the media data source comes from the network, or from the network via the user equipment, the first part of the AI model is performed on the network side and the second part on the user equipment.

In case of split operations are performed in two different endpoints, transferring intermediate data required as in input for inference of the second part may not be sufficient to calculate a consolidated result.

There is a need to solve the above issues.

### SUMMARY

In an embodiment, a method, implemented in a wireless transmit/receive unit, WTRU, may comprise a step of receiving a first message comprising first information indicating a configuration of splitting an artificial intelligence, AI, model between the WTRU and a network. The configuration of splitting the AI model may comprise a configuration of splitting an inference model of the AI model. The first message may be received from an application layer of the WTRU or from any networks. The method may comprise a step of determining, based on the first message, an AI sub model configuration comprising a first sub model configuration for the WTRU and a second sub model configuration for the network. The method may comprise a step of determining, from one or more nodes of the first sub model, one or more partial results data of inferenced input data. The method may comprise a step of determining transmission of the one or more partial results data to the network, based on the sub AI model configuration. The method may comprise a step of combining the one or more partial results data with intermediate data in a single data packet to be transmitted, based on the sub AI model configuration. The combination of the one or more partial results data with the intermediate data may comprise a step of adding the one or more partial results data in a structure of the intermediate data. The step of combining the one or more partial results data with intermediate data may comprise a step of determining a transmission format of the combination of the one or more partial results data with the intermediate data. The method may comprise a step of transmitting, to the network, a second message comprising the single data packet.

In response to transmitting the second message, the method may comprise a step of receiving, from the network, a third message comprising second information indicating final result of inferenced input data. The second sub model configuration may comprise a post processing module configuration for generating the final result from partial results.

The determined transmission format may comprise a tensor structure element list indicating any of tensor type, a tensor dimension, a tensor name, and a tensor data.

The method may comprise a step of pre-processing the input data to adapt for inference. The step of pre-processing the input data may comprise any of tensor of media data conversion, image and/or video of media data adaptation and text processing.

In an embodiment, a wireless transmit/receive unit, WTRU, comprising a processor, a transmitter, a receiver and a memory, may be configured to receive a first message comprising first information indicating a configuration of splitting an artificial intelligence, AI, model between the WTRU and a network. The WTRU may be configured to determine, based on the first message, an AI sub model configuration comprising a first sub model configuration for the WTRU and a second sub model configuration for the network. The WTRU may be configured to determine, from one or more nodes of the first sub model, one or more partial results data of inferenced input data. The WTRU may be configured to determine transmission of the one or more partial results data to the network, based on the sub AI model configuration. The WTRU may be configured to combine the one or more partial results data with intermediate data in a single data packet to be transmitted, based on the sub AI model configuration; and to transmit, to the network, a second message comprising the single data packet.

### BRIEF DESCRIPTION OF THE DRAWINGS

A more detailed understanding may be from the detailed description below, given by way of example in conjunction with drawings appended hereto. Figures in such drawings, like the detailed description, are examples. As such, the Figures (FIGs.) and the detailed description are not to be considered limiting, and other equally effective examples are possible and likely. Furthermore, like reference numerals ("ref. ") in the FIGs. indicate like elements, and wherein:
FIG. 1A is a system diagram illustrating an example communications system;
FIG. 1B is a system diagram illustrating an example wireless transmit/receive unit (WTRU) that may be used within the communications system illustrated in FIG. 1A;
FIG. 1C is a system diagram illustrating an example radio access network (RAN) and an example core network (CN) that may be used within the communications system illustrated in FIG. 1A;
FIG. 1D is a system diagram illustrating a further example RAN and a further example CN that may be used within the communications system illustrated in FIG. 1A;
FIG. 2 is a block diagram illustrating an example of a split inference model between a WTRU and a network, with media data source in the WTRU according to one embodiment;
FIG. 3 is a block diagram illustrating an example of another split inference model between a WTRU and a network, with media data source in the network according to one embodiment;
FIG. 4 is a signaling diagram illustrating an example of procedures for splitting artificial intelligence/Machine learning (AI/ML) operation according to an embodiment.
FIG. 5 is an example of two representations of the same AI model graph according to an embodiment;
FIG. 6 is illustrating an example of two split model graphs based on the model graph of FIG. 5 according to an embodiment;
FIG. 7 is a block diagram illustrating an example of another split inference model between a WTRU and a network, according to an embodiment;
FIG. 8A is a flow chart diagram illustrating an example of a method for negotiation when the WTRU produces partial results data to the network according to an embodiment;
FIG. 8B is a flow chart diagram illustrating an example of a method for inference loop when the WTRU produces partial results data to the network according to an embodiment; and
FIG. 9 is a flow chart diagram illustrating an example of a method for transmitting partial results data with intermediate data for a WTRU to a network, according to an embodiment.

### DETAILED DESCRIPTION

In the following detailed description, numerous specific details are set forth to provide a thorough understanding of embodiments and/or examples disclosed herein. However, it will be understood that such embodiments and examples may be practiced without some or all of the specific details set forth herein. In other instances, well-known methods, procedures, components and circuits have not been described in detail, so as not to obscure the following description. Further, embodiments and examples not specifically described herein may be practiced in lieu of, or in combination with, the embodiments and other examples described, disclosed or otherwise provided explicitly, implicitly and/or inherently (collectively "provided") herein. Although various embodiments are described and/or claimed herein in which an apparatus, system, device, etc. and/or any element thereof carries out an operation, process, algorithm, function, etc. and/or any portion thereof, it is to be understood that any embodiments described and/or claimed herein assume that any apparatus, system, device, etc. and/or any element thereof is configured to carry out any operation, process, algorithm, function, etc. and/or any portion thereof.

Hereinafter, 'a' and 'an' and similar phrases are to be interpreted as 'one or more' and `at least one'. Similarly, any term which ends with the suffix `(s)' is to be interpreted as 'one or more' and `at least one'. The term 'may' is to be interpreted as `may, for example'.

A sign, symbol, or mark of forward slash `/' is to be interpreted as 'and/or' unless particularly mentioned otherwise, where for example, 'A/B' may imply `A and/or B'.

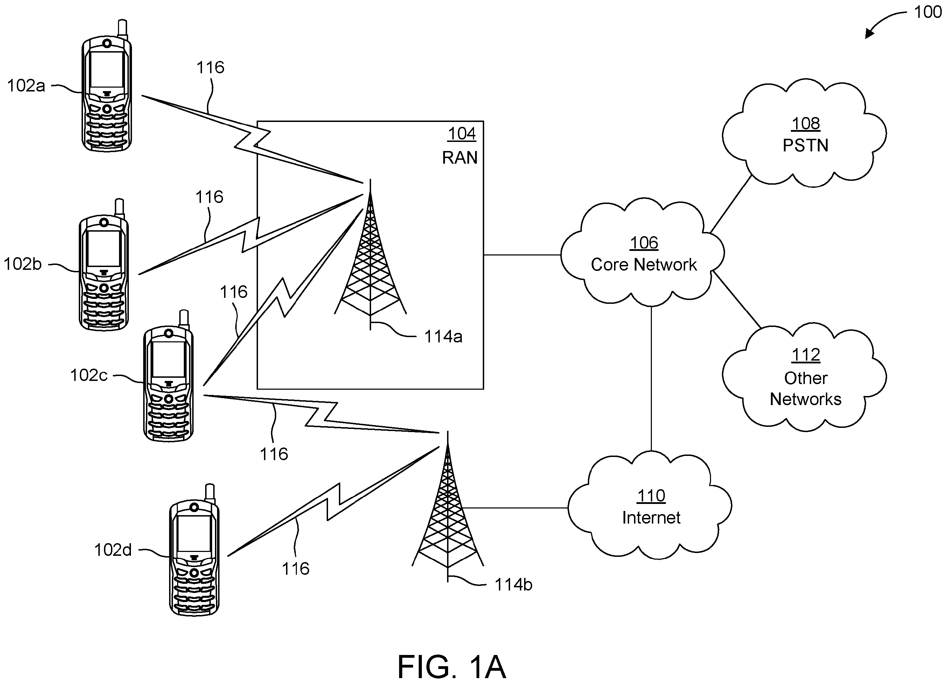

The methods, apparatuses and systems provided herein are well-suited for communications involving both wired and wireless networks. An overview of various types of wireless devices and infrastructure is provided with respect to FIGs. 1A-1D, where various elements of the network may utilize, perform, be arranged in accordance with and/or be adapted and/or configured for the methods, apparatuses and systems provided herein.

FIG. 1A is a system diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail (ZT) unique-word (UW) discreet Fourier transform (DFT) spread OFDM (ZT UW DTS-s OFDM), unique word OFDM (UW-OFDM), resource block-filtered OFDM, filter bank multi carrier (FBMC), and the like.

As shown in FIG. 1A, the communications system 100 may include wireless transmit/receive units (WTRUs) 102a, 102b, 102c, 102d, a radio access network (RAN) 104/113, a core network (CN) 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include (or be) a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d, e.g., to facilitate access to one or more communication networks, such as the CN 106/115, the Internet 110, and/or the networks 112. By way of example, the base stations 114a, 114b may be any of a base transceiver station (BTS), a Node-B (NB), an eNode-B (eNB), a Home Node-B (HNB), a Home eNode-B (HeNB), a gNode-B (gNB), a NR Node-B (NR NB), a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in an embodiment, the base station 114a may include three transceivers, i.e., one for each sector of the cell. In an embodiment, the base station 114a may employ multiple-input multiple output (MIMO) technology and may utilize multiple transceivers for each or any sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access, which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In an embodiment, the base station 114a and the WTRUs 102a, 102b, 102c may implement radio technologies such as IEEE 802.11 (i.e., Wireless Fidelity (Wi-Fi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node-B, Home eNode-B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In an embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In an embodiment, the base station 114b and the WTRUs 102c, 102d may utilize a cellular-based RAT (e.g., WCDMA, CDMA2000, GSM, LTE, LTE-A, LTE-A Pro, NR, etc.) to establish any of a small cell, picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing an NR radio technology, the CN 106/115 may also be in communication with another RAN (not shown) employing any of a GSM, UMTS, CDMA 2000, WiMAX, E-UTRA, or Wi-Fi radio technology.

The CN 106/115 may also serve as a gateway for the WTRUs 102a, 102b, 102c, 102d to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/114 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

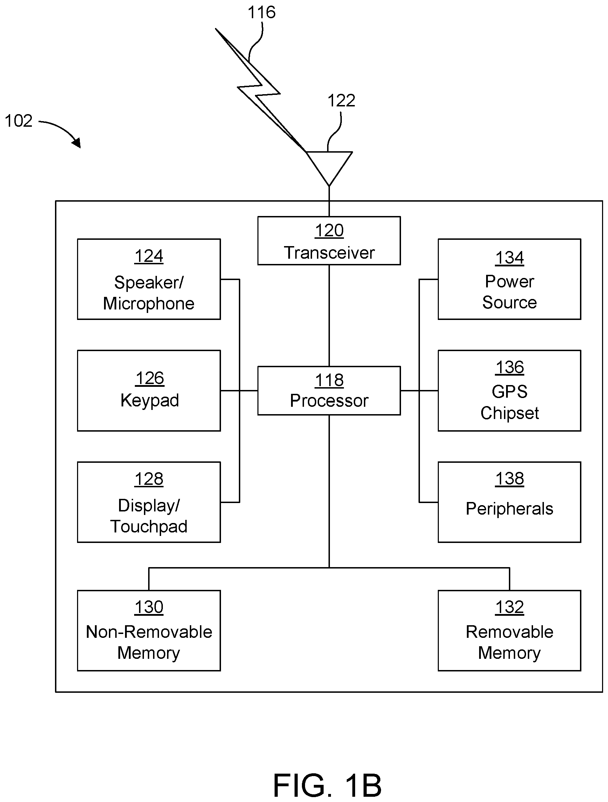

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other elements/peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together, e.g., in an electronic package or chip.

The transmit/receive element 122 may be configured to transmit signals to, or receive signals from, a base station (e.g., the base station 114a) over the air interface 116. For example, in an embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In an embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. For example, the WTRU 102 may employ MIMO technology. Thus, in an embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other elements/peripherals 138, which may include one or more software and/or hardware modules/units that provide additional features, functionality and/or wired or wireless connectivity. For example, the elements/peripherals 138 may include an accelerometer, an e-compass, a satellite transceiver, a digital camera (e.g., for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a virtual reality and/or augmented reality (VR/AR) device, an activity tracker, and the like. The elements/peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the uplink (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WTRU 102 may include a half-duplex radio for which transmission and reception of some or all of the signals (e.g., associated with particular subframes for either the uplink (e.g., for transmission) or the downlink (e.g., for reception)).

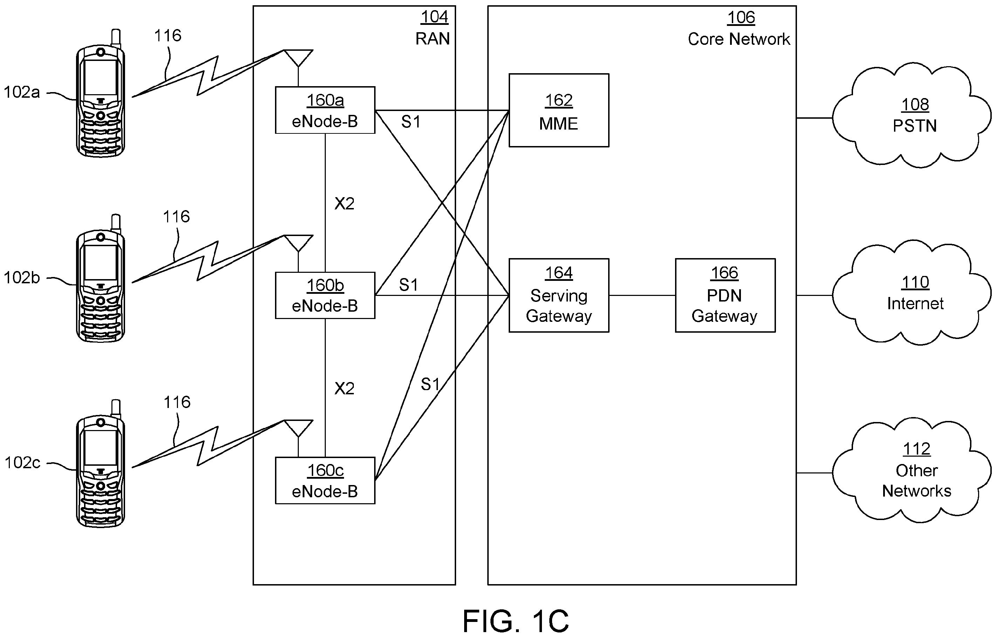

FIG. 1C is a system diagram illustrating the RAN 104 and the CN 106 according to an embodiment. As noted above, the RAN 104 may employ an E-UTRA radio technology to communicate with the WTRUs 102a, 102b, and 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In an embodiment, the eNode-Bs 160a, 160b, 160c may implement MIMO technology. Thus, the eNode-B 160a, for example, may use multiple antennas to transmit wireless signals to, and receive wireless signals from, the WTRU 102a.

Each of the eNode-Bs 160a, 160b, and 160c may be associated with a particular cell (not shown) and may be configured to handle radio resource management decisions, handover decisions, scheduling of users in the uplink (UL) and/or downlink (DL), and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (PGW) 166. While each of the foregoing elements are depicted as part of the CN 106, it will be appreciated that any one of these elements may be owned and/or operated by an entity other than the CN operator.

The MME 162 may be connected to each of the eNode-Bs 160a, 160b, and 160c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode-Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode-B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGs. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in infrastructure basic service set (BSS) mode may have an access point (AP) for the BSS and one or more stations (STAs) associated with the AP. The AP may have an access or an interface to a distribution system (DS) or another type of wired/wireless network that carries traffic into and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signalling. The primary channel may be the operating channel of the BSS and may be used by the STAs to establish a connection with the AP. In certain representative embodiments, Carrier sense multiple access with collision avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High throughput (HT) STAs may use a 40 MHz wide channel for communication, for example, via a combination of the primary 20 MHz channel with an adjacent or nonadjacent 20 MHz channel to form a 40 MHz wide channel.

Very high throughput (VHT) STAs may support 20 MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse fast Fourier transform (IFFT) processing, and time domain processing, may be done on each stream separately. The streams may be mapped on to the two 80 MHz channels, and the data may be transmitted by a transmitting STA. At the receiver of the receiving STA, the above-described operation for the 80+80 configuration may be reversed, and the combined data may be sent to a medium access control (MAC) layer, entity, etc.

Sub 1 GHz modes of operation are supported by 802.11af and 802.11ah. The channel operating bandwidths, and carriers, are reduced in 802.11af and 802.11ah relative to those used in 802.11n, and 802.1 1ac. 802.11af supports 5 MHz, 10 MHz and 20 MHz bandwidths in the TV white space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support meter type control/machine-type communications, such as machine-type communications devices in a macro coverage area. Machine-type communications devices may have certain capabilities, for example, limited capabilities including support for (e.g., only support for) certain and/or limited bandwidths. The machine-type communications devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or network allocation vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

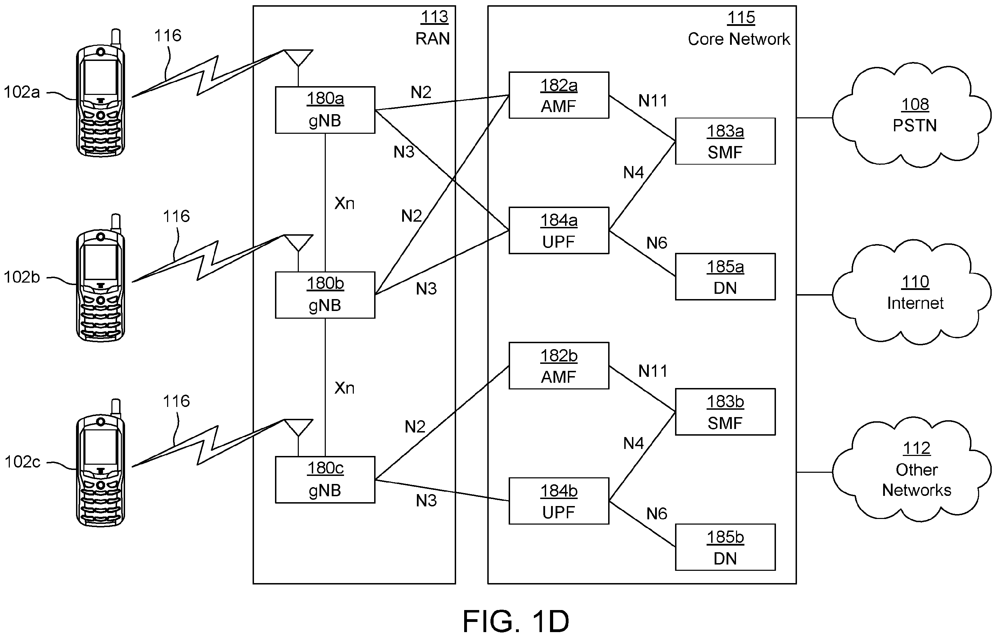

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In an embodiment, the gNBs 180a, 180b, 180c may implement MIMO technology. For example, gNBs 180a, 180b may utilize beamforming to transmit signals to and/or receive signals from the WTRUs 102a, 102b, 102c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., including a varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards user plane functions (UPFs) 184a, 184b, routing of control plane information towards access and mobility management functions (AMFs) 182a, 182b, and the like. As shown in FIG. 1D, the gNBs 180a, 180b, 180c may communicate with one another over an Xn interface.

The CN 115 shown in FIG. 1D may include at least one access and mobility management function (AMF) 182a, 182b, at least one UPF 184a, 184b, at least one session management function (SMF) 183a, 183b, and at least one Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different protocol data unit (PDU) sessions with different requirements), selecting a particular SMF 183a, 183b, management of the registration area, termination of NAS signalling, mobility management, and the like. Network slicing may be used by the AMF 182a, 182b, e.g., to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for MTC access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as Wi-Fi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, e.g., to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In an embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of FIGs. 1A-1D, and the corresponding description of FIGs. 1A-1D, one or more, or all, of the functions described herein with regard to any of: WTRUs 102a-d, base stations 114a-b, eNode-Bs 160a-c, MME 162, SGW 164, PGW 166, gNBs 180a-c, AMFs 182a-b, UPFs 184a-b, SMFs 183a-b, DNs 185a-b, and/or any other element(s)/device(s) described herein, may be performed by one or more emulation elements/devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device (e.g., a network node) may be directly coupled to another device for purposes of testing and/or may performing testing using over-the-air wireless communications.

The one or more emulation devices may perform the one or more, including all, functions while not being implemented/deployed as part of a network node (e.g., wired and/or wireless communication network). For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

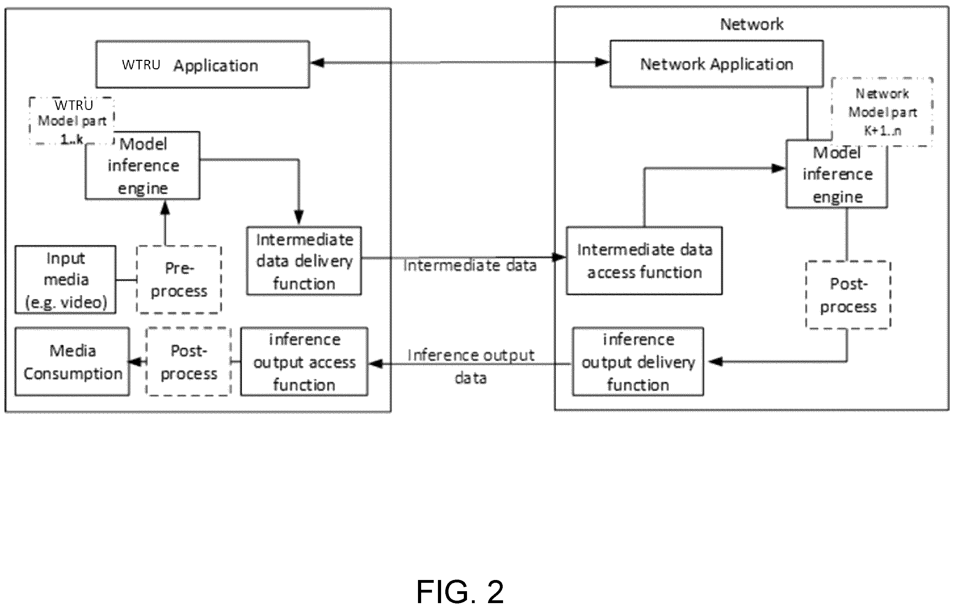

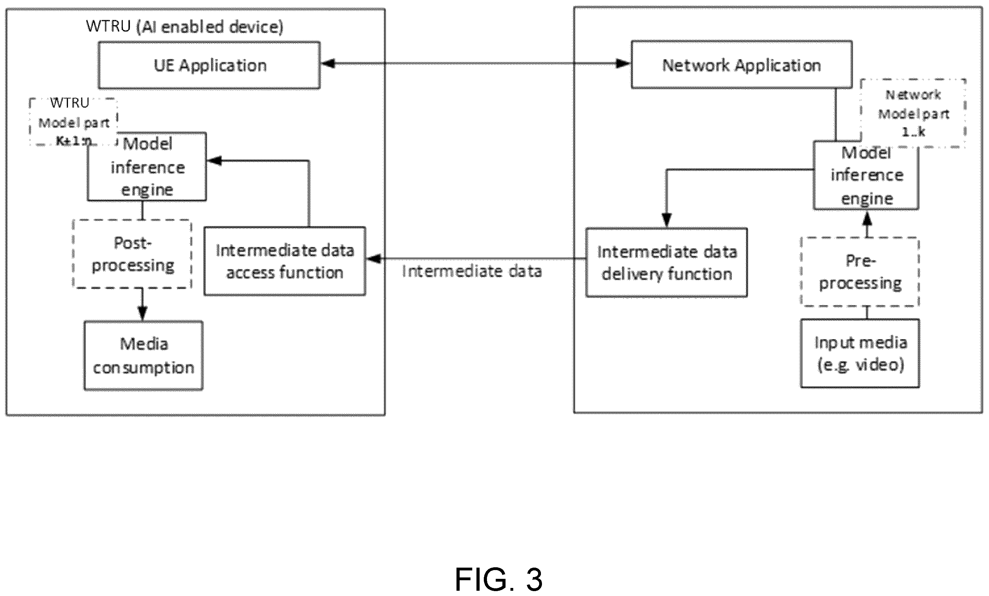

FIG. 2 and FIG. 3 show basic architectures (3GPP SA4 AI4media) for split inferences of a (e.g., AI) model (e.g., encoder/decoder) composed of n layers or nodes (1..n) between a network and a WTRU, where a first inference may process first part of the model, i.e. layers 1..k, and a second inference may process a second part of the model, i.e. layers k+1..n. The architecture shows the delivery and access functions of intermediate data between a WTRU and a network for the two different scenarios.

In a first scenario, FIG. 2 shows a split inference between the WTRU and network, with media data source in the WTRU. In case of the media data source originates from the WTRU, the first part of the inference may be performed in the WTRU, and the second part in the network, the resulting output data may be finally sent back to the WTRU.

In a second scenario, FIG. 3 shows a split inference between the WTRU and the network, with media data source in the network. In case of the media data source comes from the network, or from the network via the WTRU, the first part of the (e.g., AI) model (e.g., encoder/decoder) may be performed on the network side and the second part on the WTRU side.

Media consumption operations may require input media data to generate one or more output media data results. A post-processing operation may be required before media data consumption.

About pre-processing operations example with input media data, the pre-processing may include all the required operations media to adapt media data to input media data for the inference. Pre-processing operations may be usually brought as an embedded function to an AI application.

A framework adaptation may comprise any of converting media data to tensor (numpy array, PyTorch tensors), and tensors reshape to adapt the required input tensor shape to the expected input format.

Object detection tasks may comprise image and video adaptation such as any of format adaptation such as rescaling, orientation, segmentation, centred to a point of interest; colour correction; light adjustment for image or video segment; and sampling image, or motion correction for video.

A natural language processing (NLP) task may comprise text analysis, removal or changing text such as any of text cleaning removing punctuation, extra spaces, non-word characters, stop words; stemming which means reducing words to its word stem; lemmatization which stands as a process to reducing different forms of a word to a single form; tokenization known as converting a sequence of text into smaller said token parts; standardize all the words by lowercasing them; and part-of-speech (POS) tagging which refers to categorize the word in a text (e.g. noun, verb).

About post-processing operations example with output inference results, post-processing may (e.g., fully) depend on the model to infer. Post-processing may describe the transformation of output inference result combining the different partial results data (e.g. python tensors) to a media output representation (text/image/video) depending on an AI application (classification, segmentation, natural language processing (NLP), super solution etc.).

About object detection tasks, for an object detection example, predictions may comprise several partials results P1, P2, P3. P1 may represent bounding boxes coordinates surrounding the detected object (e.g., expressed in top x, top y, width, height in pixel values). P2 may be an identifier (e.g. 1 for person, 3 for car) corresponding to a label of the object (known in the ground truth), and P3 may be the confidence scores of the detection (e.g. from 0 to 1). For *ssd_resnet,* a bounding box may be expressed in top x, top y, bottom X, bottom Y with values from 0 to 1 (e.g. means top x=0 top y=0 is the upper left and top x=1 top y=1 is the bottom right).

A post-processing operation may be required to standardize various outputs and to calculate a final/consolidated/aggregated result from the three predictions P1, P2, P3.

For example, for P1 representing bounding boxes coordinates: output model coordinates may be expressed in pixels (640) , or in a fraction of the width (0.5 meaning 640 if width equals 1280); some models may give (x, y) of the top, left point of a box, and (x,y) of the bottom, right point of the box), other may give (x, y) of the top, left point of a box, and (width, height) to reach the bottom, right point of the box starting from the top left point.

For example, for P2, label identifier: value can be various from 0 to 999, or from 1 to 1000, for a same reference (e.g. coco dataset); models may have a dataset that include another one (for example a dataset with 1200 references, with the same 1000 first references as coco dataset). In this case we can keep value below 1000 and remove other to be able to compare various models results.

The post process may use a threshold to only keep meaningful results among the whole results. For example, the post-process may only keep the predictions P1, P2 where the confidence score P3 is above 0.4.

About natural language processing (NLP), a simple post-processing may be to use a threshold to only keep meaningful results (e.g., confidence score > 0.4). In addition post-processing for NLP tasks may cover any of: (i) stemming / lemmatization: a way to reduce words to their root, e.g., verb+ing (mounting) , verb+ed (mounted) , to verb (to mount). This enable a standardized comparison of various outputs of various NLP models; (ii) text segmentation: breaks down a long text into smaller sentences to ease a further process like sentiment analysis; (iii) aggregated sentiment analysis: aggregation of the sentiment over several sentences to give a sentiment for a whole text; and (iv) aggregated data analysis: aggregation of grammatical statistics over multiple sentences in order to provide statistics for a whole text.

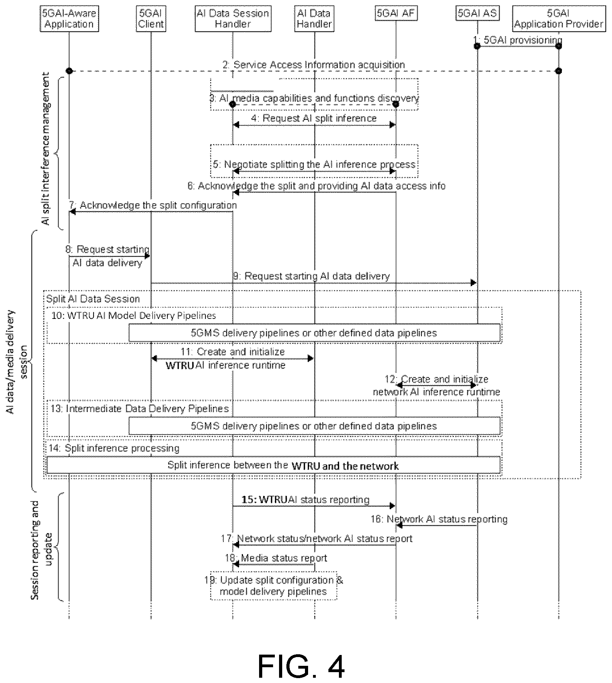

Referring to FIG. 4, an example of procedure for split operations is shown. Fig. 4 is from TR 26.927 and may defines basic procedure for Split operations in 3GPP SA4.

Referring to FIG. 4, step 5 is a determination (e.g., negotiation) step to determine (e.g., negotiate) splitting an AI inference process. A split point may be determined (e.g., negotiated) between the WTRU and the network, using information from steps 2, 3 and 4, in order to satisfy a service, capability and (e.g., AI) model (e.g., encoder/decoder) inference latency requirements. The decision of whether the split point is static or whether it can be updated dynamically during the service may be determined (e.g., negotiated). Related metadata may be shared between the network and the WTRU depending on the configuration and a set of split points can be determined (e.g., negotiated). A determined (e.g., negotiated) split point may require transmitting whole or part of output results with intermediate data when the local endpoint inferring the first part of model produce partial results data required in the second endpoint. Results may require post-processing operations that may be done in the first endpoint or in the second endpoint (WTRU/Network).

Referring to FIG. 4, step 14 is a split inference processing step. The split inference may run between the WTRU and the network. Depending on the specific split inference scenario, the WTRU and the network may deliver and/or access intermediate data, inference output data and/or metadata using the pipelines defined in the AI data delivery session. Depending on the determined (e.g., negotiated) split point configuration, the WTRU and the network may transmit partial results data with intermediate data according to the determined (e.g., negotiated) format of step 5.

Referring to FIG. 4, step 15 is a split point update and inference processing step. A split point update may be triggered, for example from the media aware application to adapt to the new conditions (e.g., WTRU capabilities or network capacity has changed). The new split point metadata information may be either determined (e.g., negotiated) between the WTRU and the network or pass alongside the delivery pipeline from the WTRU to the network side. Depending on the determined (e.g., negotiated) split point configuration, the WTRU and the network may either start to deliver partial results data with intermediate data according to the determined (e.g., negotiated) formats or stop delivering partial results data if not required on the other endpoint according to the determined (e.g., negotiated) formats step 5.

AI trained model such as deep neural network/convolutional neural network (DNN/CNN) and other can be seen as a collection of layers/nodes interconnected with edge that can be represented in a directed acyclic graph.

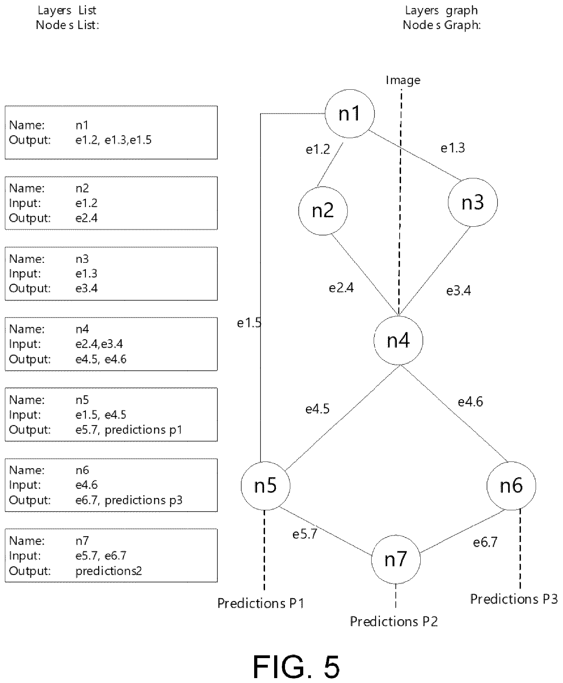

FIG. 5 shows two representations of the same (e.g., AI) model, a list of nodes or layers on the left graph, a direct acyclic graph on the right. The model may produce results, predictions P1 after node 5, predictions P3 after node 6 and another predictions P2 at node 7.

For an object detection example based on 'Retinanet' model, P1 may represent the bounding boxes coordinates surrounding the detected object (e.g., expressed in top x, top y, width, height in pixel values) , P2 may be an identifier (e.g. 1 for person, 3 for car) corresponding to a label of the object (known in the ground truth), and P3 may be the confidence scores of the detection (e.g., from 0 to 1). For ssd_resnet the bounding box may be expressed in top x, top y, bottom X, bottom Y with values from 0 to 1 (e.g., means top x=0 top y=0 is the upper left and top x=1 top y=1 is the bottom right).

A post-processing operation may be required to calculate a final/consolidated/aggregated result from the three predictions P1, P2, P3.

ONNX model graph may be an example of a neural graph that can be used to represent a split of a model for metadata format for transmission of intermediate data from a first endpoint to another. Metadata which can be determined (e.g., negotiated) or carried out with intermediate data may comprise any of: model graph parsing rules defining how to parse a shared model to extract a split model of a selected split configuration and how to identify the input tensors, and intermediate data format defining tensors structures of the intermediate data for parsing and decoding the intermediate data stream to obtain the input inference tensors.

Partial results may be defined as output predictions of a node or layer or a set of nodes or layers. The aggregation of the partial results may make up the final results. Post processing can be applied to the partial results without the need for the full results. A partial result can be considered as the final result for an application. For example, if an application only needs to know if there is an object in an image, the label identifier P2 may be sufficient.

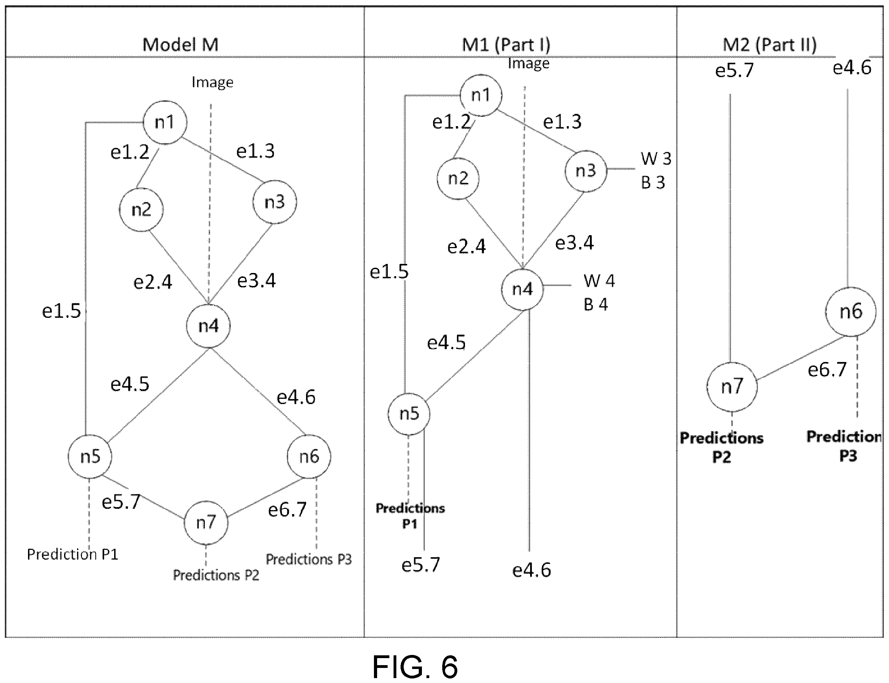

FIG. 6 shows an example of split operations of a model M that may produce results distributed between a M1 (Part 1) output and a M2 (Part 2) output. When the split operations are performed in two different endpoints, transferring only intermediate data required as an input for inference of the second part may be not sufficient to calculate a consolidated result.

FIG. 6 shows an example of split operations a (e.g., AI) model (e.g., encoder/decoder) M that may produce partial results data before the split operation and another partial results data after the split operation. In case of the split operations are performed in two different endpoints, transferring only intermediate data required as an input for inference of the second part may be not sufficient to calculate a consolidated result.

According to the embodiment shown at FIG. 6, a problem to solve regarding the issues and the statements above can be expressed as follow: How to determine partial results data required for a selected split configurations of a complex trained model? And How to transfer and provide the required partial results data from a first endpoint to a second endpoint together with the intermediate data resulting from the first endpoint ?

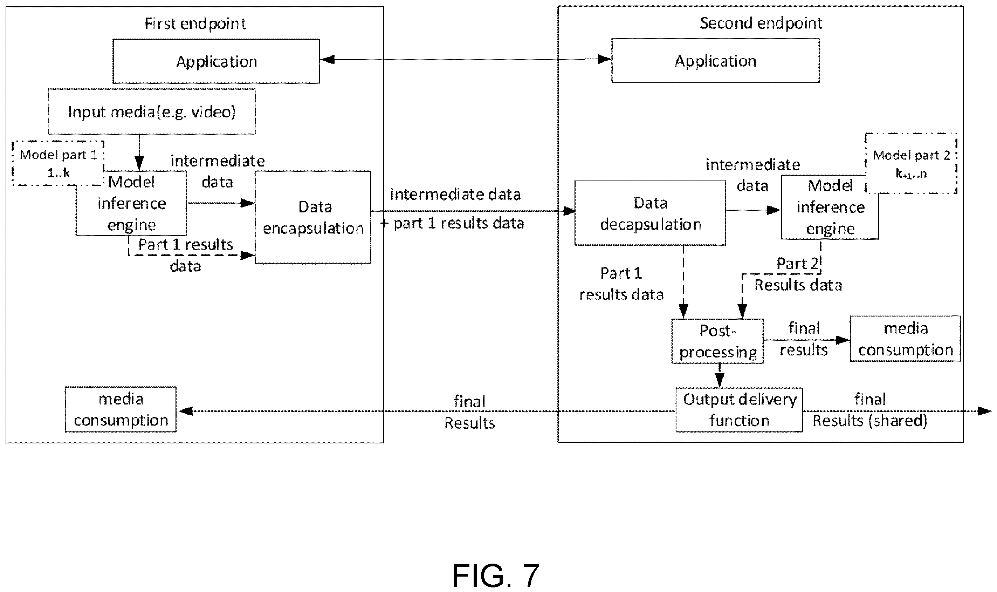

Referring to FIG. 7, the inference of a trained (e.g., AI) model (e.g., encoder/decoder) may be split between a first endpoint and a second endpoint where a first endpoint infers a first (e.g., AI) model part/subset comprising for example a set of layers or nodes from 1..k (input to layer/node k) and a second endpoint infers a second (e.g., AI) model part/subset with layers/nodes k+1 up to the last output layer/node n. The selection of the split point may determine the split point k. The endpoints may determine (e.g., negotiate) a set of split point configurations comprising different k split point.

In addition, an application running on each endpoint may determine how the partial results data (e.g., part 1) results are post-processed to the second endpoint in case of it is required by at least one split point configuration. The application running on each endpoint may determine where the partial results data (e.g., part 1) results are post-processed to the second endpoint in case of it is required by at least one split point configuration.

The selection of the split point (k) may determine whether it is necessary to transmit partial results data from one endpoint to the other. The configuration of the application may determine whether it is necessary to transmit partial results data from one endpoint to the other.

Determination (e.g., negotiation) process may include the encapsulation (e.g., the combination, the gathering, the merging) format for intermediate data and for partial results data to be transmitted.

The inferencing loop starts with the selection or reselection of a determined (e.g., negotiated) split point configuration. The selected split point and the application setup may determine whether partial results data must be transmitted between the two endpoints. The first endpoint may infer the first model part, may transmit the necessary data in the determined (e.g., negotiated) format to the second endpoint which infers the remaining part of the model, may post process results from the first inference and from the second inference to calculate and produce the final results.

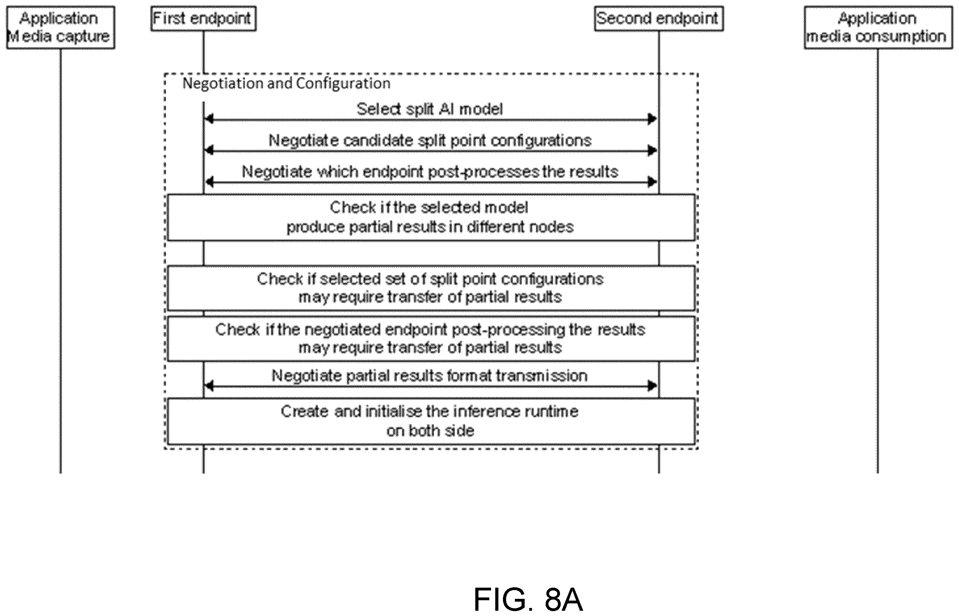

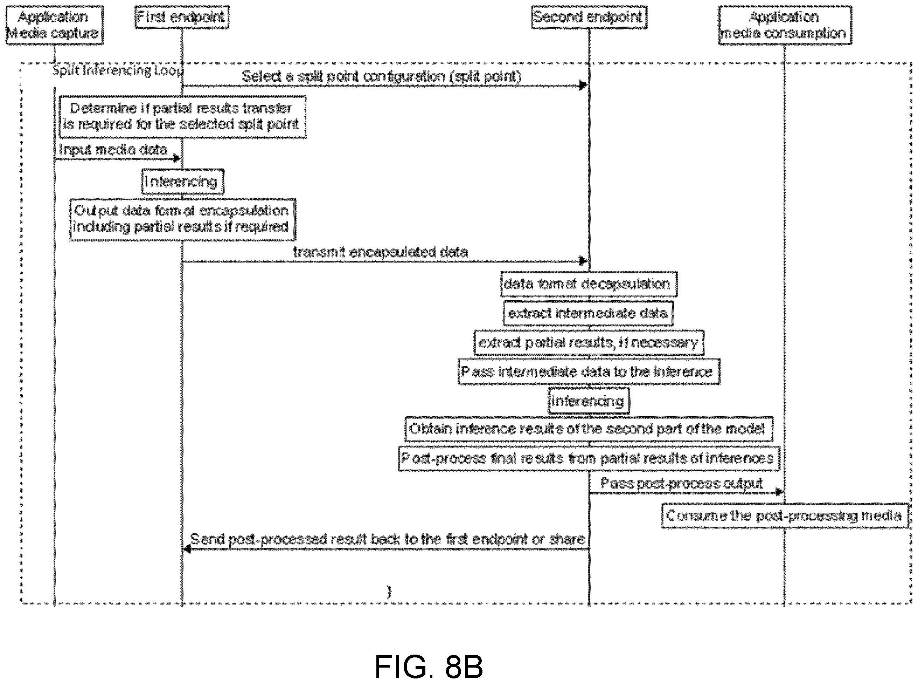

FIG. 8A and FIG. 8B depicts an example of a procedure or sequence diagram including the determination (e.g., negotiation) and the inference loop steps applied to the (e.g., generic) architecture of FIG. 7 when the first endpoint infers the first (e.g., AI) model part or subset, and the post-processing operation is performed in the second endpoint.

Referring to FIG 8A, a first and second endpoint determine (e.g., negotiate) a set of split point configurations candidate for a selected (e.g., AI) model and determine (e.g., negotiate) which endpoint post-processes the results.

In a first step, the first endpoint and/or the second endpoints may select a split (e.g., AI) model.

In a second step, the endpoints may determine (e.g., negotiate) candidate split point configurations. In a third step, the endpoints may determine (e.g., negotiate) which endpoint may post-process results.

The first endpoint and/or the second endpoints may determine (e.g., check) whether the (e.g., AI) model may produce partial results data in nodes other than the inference output node.

The first endpoint and/or the second endpoints may determine (e.g., check) whether determined (e.g., negotiated) split point configurations may require partial results data to be transmitted from the first endpoint to the second endpoint.

The first endpoint and/or the second endpoints may determine (e.g., check) if the determined (e.g., negotiated) endpoint that post-process the results may require the transfer of partial results data.

In a fourth step, the endpoints may determine (e.g., negotiated) partial results data transmission mode, if necessary, with intermediate data comprising one of: (i) existing intermediate data structure format: Add or Piggyback partial results data to the existing intermediate data structure if required; or (ii) generic data format including intermediate data and partial results data.

In a fifth step, the endpoints may create and initialize inference runtime on both endpoints.

Referring to FIG 8B, inference loop steps are shown.

In a first step, the first endpoint may select or reselect a split point configuration, wherein a split point may determine whether partial results data are produced in the first endpoint and whether it is required for a post-processing operation in the second endpoint. The first endpoint may determine whether partial results data are required for transfer. The first endpoint may infer the first (e.g., AI) model (e.g., encoder/decoder) part from input media data (e.g., received from an application). The first endpoint may encapsulate (e.g., combine, gather, the merge) data according to the determined (e.g., negotiated) data format: intermediate data format or part 1 results format (if required).

In a second step, the first endpoint may transmit to the second endpoint, partial results data and intermediate data as determined (e.g., negotiated). The second endpoint may receive intermediate data and part 1 results data as determined (e.g., negotiated). The second endpoint may decapsulate (e.g., de-combine, de-gather, the de-merge) data from data format. The second endpoint may extract intermediate data. The second endpoint may extract part 1 results and may determine (e.g., check) the partial results data format. The second endpoint may pass intermediate data to inference engine and may infer the second model part. The second endpoint may obtain part 2 results for the second part of the model. The second endpoint may post-process by calculating the final result from part 1 and part 2 results. The second endpoint may pass post-process outputs for media consumption.

In a third step, the second endpoint may transmit post-processed result back to the first endpoint or share to peer user if required.

In an alternative, the post processing may be processed in the first endpoint such that the second endpoint may transmit to the first endpoint the part 2 results. In such case, post processing in the first endpoint may comprise aggregate (e.g., calculate) the final result from part 1 and part 2 results.

In an embodiment, encapsulation (e.g., the combination, the gathering, the merging) can be performed via serialization tools, for example using JSON, or Protobuf.

Output partial result format may comprise a set of output data information. This may include output results of one or several split points. The output media data structure may comprise (i) media data type as any of image, video sequence, audio sample, text, and number; (ii) media output data format as (i) value type: e.g. accuracy, confidence, quality element, bitstream, coordinates; element list: e.g. bounding box coordinates, textual string for NLP; or N dimensional tensor: e.g. media image, audio etc; (iii) media output information as any of image size in pixel/pixel (e.g., 1920x1200), format type of each tensor entry (e.g., integer32, integer64, float32, string), tensor name, video frame per seconds (e.g., 30, 60 FPS), dimension category (e.g., 2D, 3D), image compression algorithm (e.g., None, JPEG, WebP, HEIC), video compression algorithm (e.g., H264/AVC, H265/HEVC, H266/VVC, VP9, AV1), Audio compression algorithm (e.g., AAC/MP3/WAV), and video volumetric (e.g., V3C) ; (iv) Output payload length; and (v) Output payload.

An example of representation of the output media data structure in a python dictionary format is shown below:

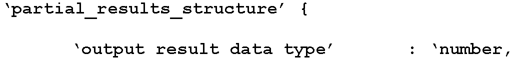

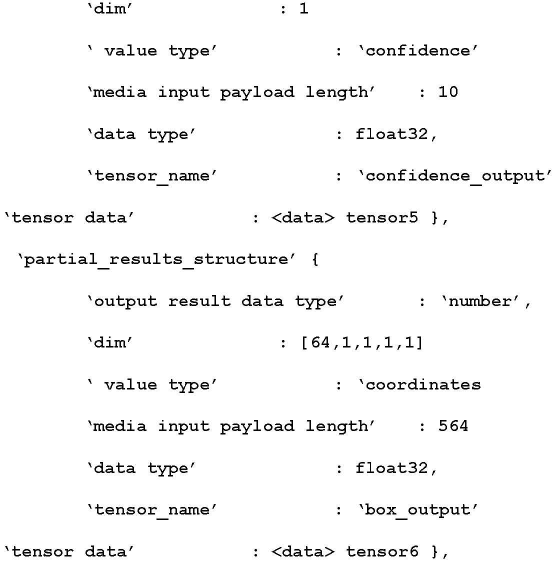

About in band transmission format with intermediate data and partial results data, at least two different formats may be used to transmit intermediate data including partial results data (if required) between the two endpoints. The transmission format may comprise structures to carry required partial results data alongside the intermediate data resulting from the inference of the first endpoint.

In an embodiment, the transmission format may comprise piggyback partial results data to (e.g., the existing) intermediate data output resulting from the first inference in adding a new element to the existing structure of the intermediate data output.

For example, in a model computing graph such as ONNX, all inputs/outputs of a split model may be organized as an order list of tensors structure (e.g., python dictionary), When the split happens on each device, the first device may know the requested input structure of the second part of the model and, may add a new entry to the structure for transmitting and piggybacking the partial results data. The second endpoint may parse the received tensor structure to extract the partial results data from the intermediate data.

An example with ONNX may be intermediate data structure of input data inference following the dictionary *Dict {'tensor_name': tensor_value}.*

Below is shown an example of dictionary structure in python where dict = {key, value} with addition of new partial results data format element. 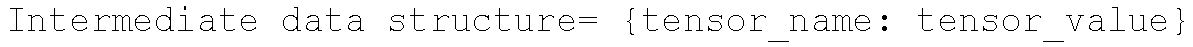 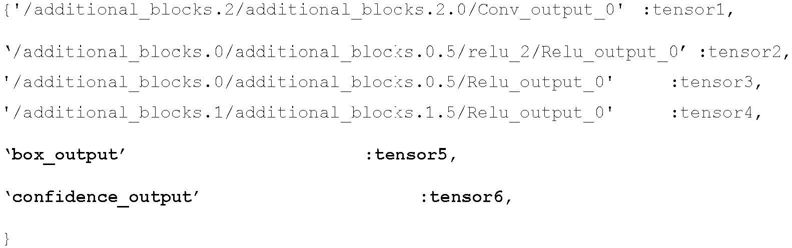 where _{box_output} is the tensor name of the output prediction P1 (FIG. 5) and _{confidence_output'} is the tensor name of the output prediction P3 (FIG. 5).

As a first embodiment, both endpoints may determine (e.g., negotiate) and may know the inner intermediate data structure for all the necessary split configurations. The characteristics of each tensor can be retrieved from the tensor name. For example, the (e.g., AI) model may be already split in two parts, part1 and part 2. The second endpoint may load part2 (e.g., AI) model of a given split point configuration. The second endpoint may determine (e.g., negotiate) the intermediate data structure with the first endpoint, and may know the tensor format obtain from the payload, e.g., tensor1, tensor5 and tensor 6 structure where tensor5 and tensor6 may be extracted and decoded to retrieve the partial results data format known before.

In an embodiment, the transmission format may comprise a (e.g., generic) structure that can be used and designed without any explicit mapping to the input inference structure framework dependency. An encapsulation (e.g., the combination, the gathering, the merging) function may encapsulate (e.g., combine, gather, merge) the output intermediate data and partial results data in a single structure and a decapsulation (e.g., a de-combination, a de-gathering, a de-merging) function may decapsulate (e.g., combine, gather, merge) the received structure to provide the intermediate data for inference on one side and the partial results data on other side.

The (e.g., generic) split data structure may comprise a header including any of a length of data payload, and a number of tensor structure elements.

The (e.g., generic) split data structure may comprise a specific tensor structure element list including any of a type (e.g., 'Intermediate data or 'partial results data'), a tensor dimension, a node/layer identifier output of the structure, an intermediate data compression algorithm (e.g., none, name of the algorithm (FC-VCM)), a data type of each tensor entry (e.g., integer32, integer64, float32, string), an output media data structure if type is 'partial results data', a tensor name, and a tensor data.

As an example, a dictionary or list of tensor identifiers (tensor name) and tensors according to a dictionary structure in python where dict = {key, value} and the dictionary structure for the intermediate data carriage can be: {layer_name: {'dim': value, `type':value, `tensor data': value}} where layer_name is a string of the layer.

A dictionary or list of tensor identifiers (tensor name) and tensors according to a dictionary structure in python is shown below:

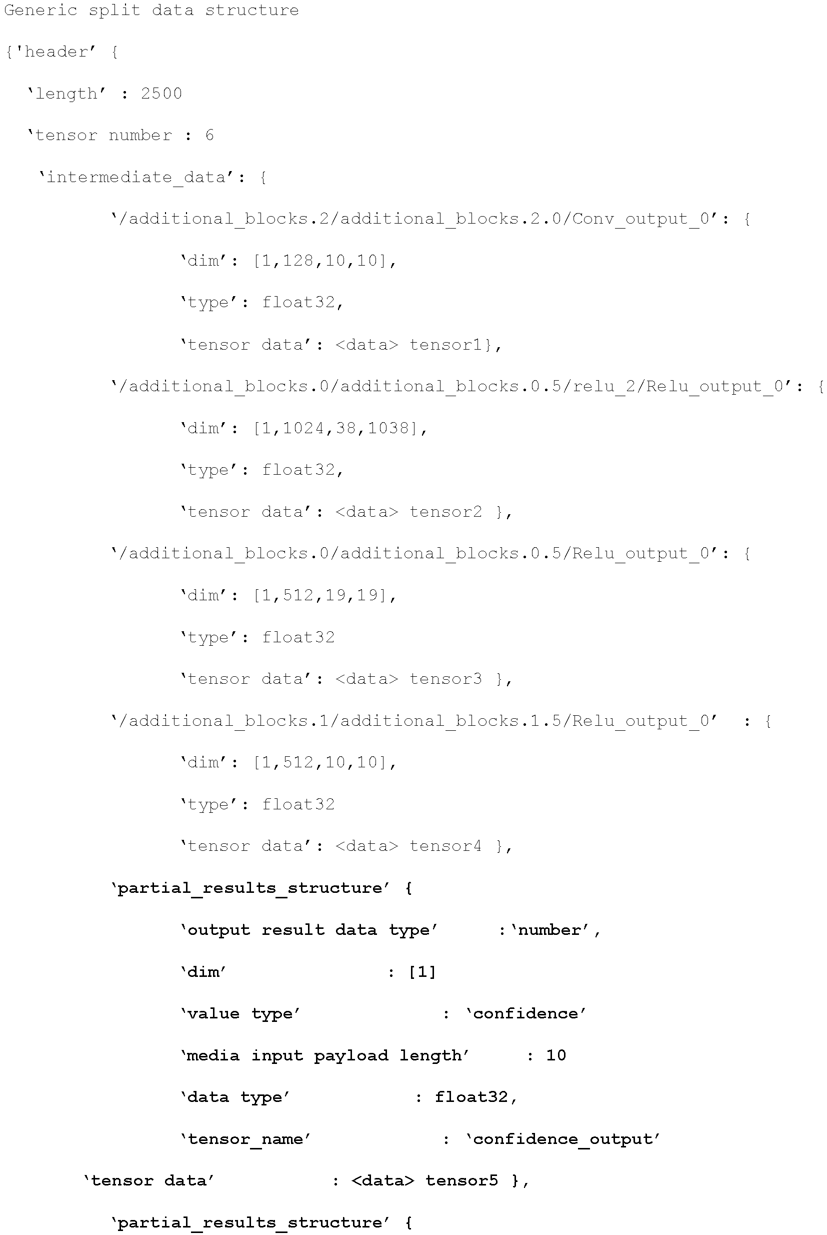

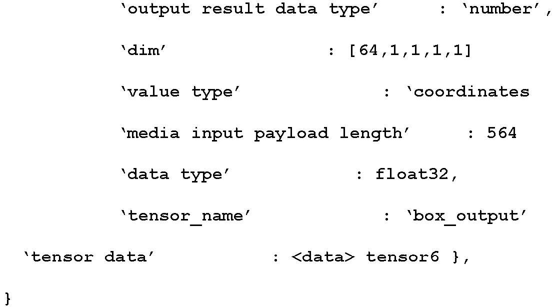

In an embodiment, a method to transport inference results, partial or aggregated, with intermediate data from one endpoint to another may depend on the selection of an (e.g., AI) model to be split between two endpoints. Determination (e.g., negotiation) between the two endpoints on partial results data to be transmitted from one endpoint to another endpoint may depend on the split points configurations. The determination (e.g., negotiation) may include determination (e.g., negotiation) of the transmission format for the output results with intermediate data. There are at least two alternatives for transmitting inference results with intermediate data: (i) piggybacking the inference results to an existing intermediate output delivery format; and (ii) using a (e.g., generic) structure format independent from the AIML framework. The inference loop's decision whether to transmit partial results with intermediate data may depend on the selection or the reselection of a determined (e.g., negotiated) split point configuration. The inference loop operations may include delivery and access of transmitted partial results with intermediate data according to the transmission format.

According to described examples/solutions/embodiments above, a method to transport inference results, partial or aggregated may enable a larger range of split points when a split is needed. The method may split inference for complex model on any split point configuration, including those which produces partial results in nodes belonging to the first part of the model to infer in a first endpoint and required for the calculation of the final results a partial results produced by nodes belonging to a second part of the model to infer in the second endpoint. The solution to piggyback partial results with the intermediate data may enable a formal and efficient way to transmit those data and, may not need synchronisation between the different type of transmitted data.

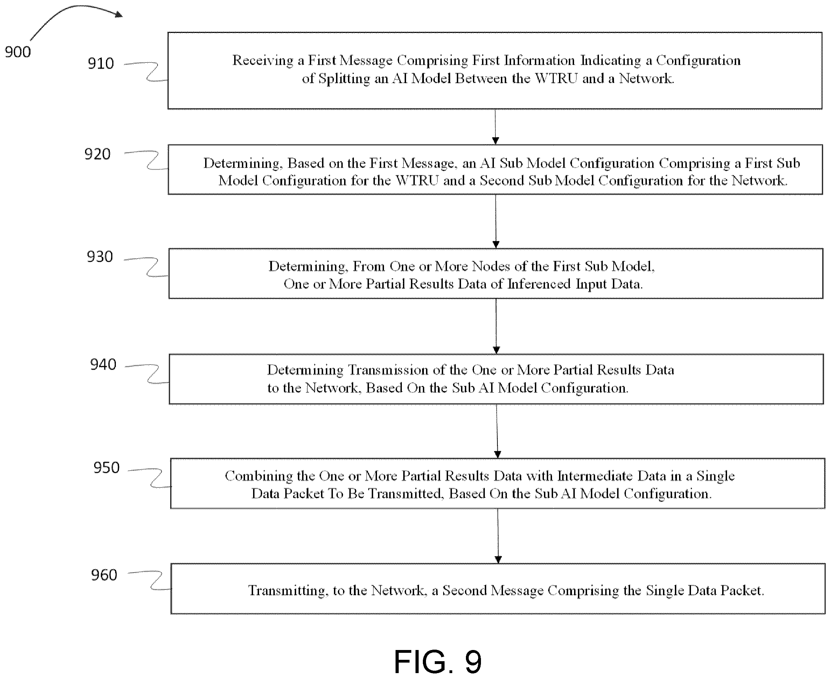

Referring to FIG. 9, a flow chart diagram illustrating an example of a method 900 for transmitting partial results data with intermediate data for a WTRU to a network is shown.

The method 900 may comprise a step wherein the WTRU may receive 910 a first message comprising first information indicating a configuration of splitting an artificial intelligence, AI, model between the WTRU and a network. The configuration of splitting the AI model may comprise a configuration of splitting an inference model of the AI model. The first message may be received from an application layer of the WTRU or from any networks. The method 900 may comprise a step wherein the WTRU may determine 920, based on the first message, an AI sub model configuration comprising a first sub model configuration for the WTRU and a second sub model configuration for the network The method 900 may comprise a step wherein the WTRU may determine 930, from one or more nodes of the first sub model, one or more partial results data of inferenced input data. The method 900 may comprise a step wherein the WTRU may determine 940 transmission of the one or more partial results data to the network, based on the sub AI model configuration. The method 900 may comprise a step wherein the WTRU may combine 950 (e.g., merge/gather) the one or more partial results data with intermediate data in a single data packet to be transmitted, based on the sub AI model configuration. The combination of the one or more partial results data with the intermediate data may comprise a step of adding the one or more partial results data in a structure of the intermediate data. The step of combining the one or more partial results data with intermediate data may comprise a step of determining a transmission format of the combination of the one or more partial results data with the intermediate data. The method 900 may comprise a step wherein the WTRU may transmit 960, to the network, a second message comprising the single data packet.

In response to transmitting the second message, the method 900 may comprise a step wherein the WTRU may receive, from the network, a third message comprising second information indicating final result of inferenced input data. The second sub model configuration may comprise a post processing module configuration for generating the final result from partial results. The determined transmission format may comprise a tensor structure element list indicating any of tensor type, a tensor dimension, a tensor name, and a tensor data.

The method 900 may comprise a step wherein the WTRU may pre-process the input data to adapt for inference. The step of pre-processing the input data may comprise any of tensor of media data conversion, image and/or video of media data adaptation and text processing.

Although features and elements are provided above in particular combinations, one of ordinary skill in the art will appreciate that each feature or element can be used alone or in any combination with the other features and elements. The present disclosure is not to be limited in terms of the particular embodiments described in this application, which are intended as illustrations of various aspects. Many modifications and variations may be made without departing from its spirit and scope, as will be apparent to those skilled in the art. No element, act, or instruction used in the description of the present application should be construed as critical or essential to the invention unless explicitly provided as such. Functionally equivalent methods and apparatuses within the scope of the disclosure, in addition to those enumerated herein, will be apparent to those skilled in the art from the foregoing descriptions. Such modifications and variations are intended to fall within the scope of the appended claims. The present disclosure is to be limited only by the terms of the appended claims, along with the full scope of equivalents to which such claims are entitled. It is to be understood that this disclosure is not limited to particular methods or systems.

The foregoing embodiments are discussed, for simplicity, with regard to the terminology and structure of infrared capable devices, i.e., infrared emitters and receivers. However, the embodiments discussed are not limited to these systems but may be applied to other systems that use other forms of electromagnetic waves or non-electromagnetic waves such as acoustic waves.

It is also to be understood that the terminology used herein is for the purpose of describing particular embodiments only and is not intended to be limiting. As used herein, the term "video" or the term "imagery" may mean any of a snapshot, single image and/or multiple images displayed over a time basis. As another example, when referred to herein, the terms "user equipment" and its abbreviation "UE", the term "remote" and/or the terms "head mounted display" or its abbreviation "HMD" may mean or include (i) a wireless transmit and/or receive unit (WTRU); (ii) any of a number of embodiments of a WTRU; (iii) a wireless-capable and/or wired-capable (e.g., tetherable) device configured with, inter alia, some or all structures and functionality of a WTRU; (iii) a wireless-capable and/or wired-capable device configured with less than all structures and functionality of a WTRU; or (iv) the like. Details of an example WTRU, which may be representative of any WTRU recited herein, are provided herein with respect to FIGs. 1A-1D. As another example, various disclosed embodiments herein *supra* and *infra* are described as utilizing a head mounted display. Those skilled in the art will recognize that a device other than the head mounted display may be utilized and some or all of the disclosure and various disclosed embodiments can be modified accordingly without undue experimentation. Examples of such other device may include a drone or other device configured to stream information for providing the adapted reality experience.

In addition, the methods provided herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

Variations of the method, apparatus and system provided above are possible without departing from the scope of the invention. In view of the wide variety of embodiments that can be applied, it should be understood that the illustrated embodiments are examples only, and should not be taken as limiting the scope of the following claims. For instance, the embodiments provided herein include handheld devices, which may include or be utilized with any appropriate voltage source, such as a battery and the like, providing any appropriate voltage.

Moreover, in the embodiments provided above, processing platforms, computing systems, controllers, and other devices that include processors are noted. These devices may include at least one Central Processing Unit ("CPU") and memory. In accordance with the practices of persons skilled in the art of computer programming, reference to acts and symbolic representations of operations or instructions may be performed by the various CPUs and memories. Such acts and operations or instructions may be referred to as being "executed," "computer executed" or "CPU executed."

One of ordinary skill in the art will appreciate that the acts and symbolically represented operations or instructions include the manipulation of electrical signals by the CPU. An electrical system represents data bits that can cause a resulting transformation or reduction of the electrical signals and the maintenance of data bits at memory locations in a memory system to thereby reconfigure or otherwise alter the CPU's operation, as well as other processing of signals. The memory locations where data bits are maintained are physical locations that have particular electrical, magnetic, optical, or organic properties corresponding to or representative of the data bits. It should be understood that the embodiments are not limited to the above-mentioned platforms or CPUs and that other platforms and CPUs may support the provided methods.

The data bits may also be maintained on a computer readable medium including magnetic disks, optical disks, and any other volatile (e.g., Random Access Memory (RAM)) or non-volatile (e.g., Read-Only Memory (ROM)) mass storage system readable by the CPU. The computer readable medium may include cooperating or interconnected computer readable medium, which exist exclusively on the processing system or are distributed among multiple interconnected processing systems that may be local or remote to the processing system. It should be understood that the embodiments are not limited to the above-mentioned memories and that other platforms and memories may support the provided methods.

In an illustrative embodiment, any of the operations, processes, etc. described herein may be implemented as computer-readable instructions stored on a computer-readable medium. The computer-readable instructions may be executed by a processor of a mobile unit, a network element, and/or any other computing device.

There is little distinction left between hardware and software implementations of aspects of systems. The use of hardware or software is generally (but not always, in that in certain contexts the choice between hardware and software may become significant) a design choice representing cost versus efficiency tradeoffs. There may be various vehicles by which processes and/or systems and/or other technologies described herein may be effected (e.g., hardware, software, and/or firmware), and the preferred vehicle may vary with the context in which the processes and/or systems and/or other technologies are deployed. For example, if an implementer determines that speed and accuracy are paramount, the implementer may opt for a mainly hardware and/or firmware vehicle. If flexibility is paramount, the implementer may opt for a mainly software implementation. Alternatively, the implementer may opt for some combination of hardware, software, and/or firmware.

The foregoing detailed description has set forth various embodiments of the devices and/or processes via the use of block diagrams, flowcharts, and/or examples. Insofar as such block diagrams, flowcharts, and/or examples include one or more functions and/or operations, it will be understood by those within the art that each function and/or operation within such block diagrams, flowcharts, or examples may be implemented, individually and/or collectively, by a wide range of hardware, software, firmware, or virtually any combination thereof. In an embodiment, several portions of the subject matter described herein may be implemented via Application Specific Integrated Circuits (ASICs), Field Programmable Gate Arrays (FPGAs), digital signal processors (DSPs), and/or other integrated formats. However, those skilled in the art will recognize that some aspects of the embodiments disclosed herein, in whole or in part, may be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skill in the art in light of this disclosure. In addition, those skilled in the art will appreciate that the mechanisms of the subj ect matter described herein may be distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a recordable type medium such as a floppy disk, a hard disk drive, a CD, a DVD, a digital tape, a computer memory, etc., and a transmission type medium such as a digital and/or an analog communication medium (e.g., a fiber optic cable, a waveguide, a wired communications link, a wireless communication link, etc.).

Those skilled in the art will recognize that it is common within the art to describe devices and/or processes in the fashion set forth herein, and thereafter use engineering practices to integrate such described devices and/or processes into data processing systems. That is, at least a portion of the devices and/or processes described herein may be integrated into a data processing system via a reasonable amount of experimentation. Those having skill in the art will recognize that a typical data processing system may generally include one or more of a system unit housing, a video display device, a memory such as volatile and non-volatile memory, processors such as microprocessors and digital signal processors, computational entities such as operating systems, drivers, graphical user interfaces, and applications programs, one or more interaction devices, such as a touch pad or screen, and/or control systems including feedback loops and control motors (e.g., feedback for sensing position and/or velocity, control motors for moving and/or adjusting components and/or quantities). A typical data processing system may be implemented utilizing any suitable commercially available components, such as those typically found in data computing/communication and/or network computing/communication systems.

The herein described subject matter sometimes illustrates different components included within, or connected with, different other components. It is to be understood that such depicted architectures are merely examples, and that in fact many other architectures may be implemented which achieve the same functionality. In a conceptual sense, any arrangement of components to achieve the same functionality is effectively "associated" such that the desired functionality may be achieved. Hence, any two components herein combined to achieve a particular functionality may be seen as "associated with" each other such that the desired functionality is achieved, irrespective of architectures or intermedial components. Likewise, any two components so associated may also be viewed as being "operably connected", or "operably coupled", to each other to achieve the desired functionality, and any two components capable of being so associated may also be viewed as being "operably couplable" to each other to achieve the desired functionality. Specific examples of operably couplable include but are not limited to physically mateable and/or physically interacting components and/or wirelessly interactable and/or wirelessly interacting components and/or logically interacting and/or logically interactable components.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, where only one item is intended, the term "single" or similar language may be used. As an aid to understanding, the following appended claims and/or the descriptions herein may include usage of the introductory phrases "at least one" and "one or more" to introduce claim recitations. However, the use of such phrases should not be construed to imply that the introduction of a claim recitation by the indefinite articles "a" or "an" limits any particular claim including such introduced claim recitation to embodiments including only one such recitation, even when the same claim includes the introductory phrases "one or more" or "at least one" and indefinite articles such as "a" or "an" (e.g., "a" and/or "an" should be interpreted to mean "at least one" or "one or more"). The same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B." Further, the terms "any of" followed by a listing of a plurality of items and/or a plurality of categories of items, as used herein, are intended to include "any of," "any combination of," "any multiple of," and/or "any combination of multiples of" the items and/or the categories of items, individually or in conjunction with other items and/or other categories of items. Moreover, as used herein, the term "set" is intended to include any number of items, including zero. Additionally, as used herein, the term "number" is intended to include any number, including zero. And the term "multiple", as used herein, is intended to be synonymous with "a plurality".

In addition, where features or aspects of the disclosure are described in terms of Markush groups, those skilled in the art will recognize that the disclosure is also thereby described in terms of any individual member or subgroup of members of the Markush group.

As will be understood by one skilled in the art, for any and all purposes, such as in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, etc. As a non-limiting example, each range discussed herein may be readily broken down into a lower third, middle third and upper third, etc. As will also be understood by one skilled in the art all language such as "up to," "at least," "greater than," "less than," and the like includes the number recited and refers to ranges which can be subsequently broken down into subranges as discussed above. Finally, as will be understood by one skilled in the art, a range includes each individual member. Thus, for example, a group having 1-3 cells refers to groups having 1, 2, or 3 cells. Similarly, a group having 1-5 cells refers to groups having 1, 2, 3, 4, or 5 cells, and so forth.

Moreover, the claims should not be read as limited to the provided order or elements unless stated to that effect. In addition, use of the terms "means for" in any claim is intended to invoke 35 U.S.C. §112, ¶ 6 or means-plus-function claim format, and any claim without the terms "means for" is not so intended.

## Claims

1. A method, implemented in a wireless transmit/receive unit, WTRU, comprising:
receiving a first message comprising first information indicating a configuration of splitting an artificial intelligence, AI, model between the WTRU and a network;
determining, based on the first message, an AI sub model configuration comprising a first sub model configuration for the WTRU and a second sub model configuration for the network;
determining, from one or more nodes of the first sub model, one or more partial results data of inferenced input data;
determining transmission of the one or more partial results data to the network, based on the sub AI model configuration;
combining the one or more partial results data with intermediate data in a single data packet to be transmitted, based on the sub AI model configuration; and
transmitting, to the network, a second message comprising the single data packet.

2. The method of claim 1 comprising, in response to transmitting the second message, receiving, from the network, a third message comprising second information indicating final result of inferenced input data.

3. The method of claim 2, wherein the second sub model configuration comprises a post processing module configuration for generating the final result from partial results.

4. The method of any of claim 1 to claim 3, wherein the configuration of splitting the AI model comprises a configuration of splitting an inference model of the AI model.

5. The method of any of claim 1 to claim 4, wherein the combination of the one or more partial results data with the intermediate data comprises adding the one or more partial results data in a structure of the intermediate data.

6. The method of any of claim 1 to claim 5, wherein combining the one or more partial results data with intermediate data comprising determining a transmission format of the combination of the one or more partial results data with the intermediate data.

7. The method of claim 6, wherein the determined transmission format comprises a tensor structure element list indicating any of tensor type, a tensor dimension, a tensor name, and a tensor data.

8. The method of any of claim 1 to claim 7, comprising pre-processing the input data to adapt for inference.

9. The method of claim 8, wherein pre-processing the input data comprising any of tensor of media data conversion, image and/or video of media data adaptation and text processing.

10. A wireless transmit/receive unit, WTRU, comprising a processor, a transmitter, a receiver and a memory, configured to:
receive a first message comprising first information indicating a configuration of splitting an artificial intelligence, AI, model between the WTRU and a network;
determine, based on the first message, an AI sub model configuration comprising a first sub model configuration for the WTRU and a second sub model configuration for the network;
determine, from one or more nodes of the first sub model, one or more partial results data of inferenced input data;
determine transmission of the one or more partial results data to the network, based on the sub AI model configuration;
combine the one or more partial results data with intermediate data in a single data packet to be transmitted, based on the sub AI model configuration; and
transmit, to the network, a second message comprising the single data packet.

11. The WTRU of claim 10 configured to receive from the network, a third message comprising second information indicating final result of inferenced input data, in response to transmitting the second message.

12. The WTRU of claim 11, wherein the second sub model configuration comprises a post processing module configuration for generating the final result from partial results.

13. The WTRU of any of claim 10 to claim 12, wherein the configuration of splitting the AI model comprises a configuration of splitting an inference model of the AI model.

14. The WTRU of any of claim 10 to claim 13, wherein the combination of the one or more partial results data with the intermediate data comprises adding the one or more partial results data in a structure of the intermediate data.

15. The WTRU of any of claim 10 to claim 14, wherein combining the one or more partial results data with intermediate data comprising determining a transmission format of the combination of the one or more partial results data with the intermediate data.
